# EUROPEAN PATENT APPLICATION

(11) **EP 1 746 834 A2**
(43) Date of publication of application: **24.01.2007**
(21) Application number: 06015034.9
(22) Date of filing: 19.07.2006
(51) Int. Cl.: H04N 7/173

(54) **Systems, methods, and apparatus for trick mode**

(30) Priority: 21.07.2005 US 702656 P; 18.07.2006 US 488275
(71) Applicant: Broadcom Corporation, Irvine, CA 92618-7013 (US)
(72) Inventor: MacInnis, Alexander, Lake Oswego, OR 97034 (US)
(74) Representative: Bosch, Matthias

(57) **Abstract**

Presented herein are system(s), method(s), and apparatus for a trick mode. In one embodiment, there is presented a system for displaying video data. The system comprises a buffer and a first circuit. The storage receives a normal video stream. The first circuit generates a trick mode stream from the normal video stream.

## Description

### RELATED APPLICATIONS

This application claims priority to "Systems, Methods, and Apparatus for Trick Mode", Provisional Application for U.S. Patent (Attorney Docket No. 16838US01), Serial No. 60/702,656, filed July 21, 2005 by MacInnis.

### BACKGROUND OF THE INVENTION

Fast-forward and rewind are functions that are commonly used by users while viewing a video. These functions allow the user to navigate through the video. Fast-forward allows the user to play the video at a higher rate of speed. Rewind allows the user to play the video in reverse. The fast-forward and rewind speeds can be controllable.

In video compression, the decoding of video fields or frames may be dependent on other fields or frames. The data dependencies can constrain the order that the fields or frames are decoded. The data dependencies can also necessitate storage of a field or frame for a period of time after decoding, and/or displaying.

The data dependencies of the fields/frames are defined and constrained by the compression standards, such that the pictures can be displayed in the playback order, in a relatively simple manner. However, the rewind and fast forward decode order and display order may be more complicated than the normal playback order.

In MPEG-2 the data dependencies between pictures are constrained, such that no more than two decoded pictures need to be available to decode another picture. Additionally, certain pictures, known as B-pictures, are not needed for decoding other pictures. Additionally, random access points are typically inserted at frequent intervals. Therefore, during a fast forward or fast rewind, the B-pictures can be skipped, altogether.

In other standards, such as Advanced Video Coding (AVC) (also known as H.264 and MPEG-4 Part 10) the data dependencies that are permitted between pictures are less constrained than in MPEG-2. More pictures can be used for decoding other pictures, and almost all pictures can be used as references for encoding other pictures. Additionally, there may be fewer random access points compared to MPEG-2.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the present invention may be found in system(s), method(s), and apparatus for trick mode, substantially as shown in and/or described in connection with at least one of the figures, as set forth more completely in the claims.
According to another aspect of the invention, a method for providing video data, said method comprises:
transmitting a normal video stream representing video content, wherein the normal video stream is for normal playback; and
transmitting a trick mode stream representing the video content, wherein the trick mode stream is for trick mode play.
Advantageously the trick mode stream comprises fewer pictures than the normal video stream.
Advantageously the trick mode stream comprises pictures with lower resolution than pictures from the normal video stream.

### Advantageously, said method further comprises:

### encrypting the normal video stream.

Advantageously the video content comprises a plurality of pictures, and wherein the method further comprises:
encoding a particular picture from the plurality of pictures to form a portion of the normal video stream;
encoding the particular picture from the plurality of pictures to form a portion of the trick mode stream; and
encoding another picture from the plurality of the pictures for the normal video stream after encoding the particular picture from the plurality of pictures to form portions of the normal video stream and the trick mode stream.
Advantageously encoding the particular picture from the plurality of pictures to form a portion of the trick mode stream further comprises:
encoding the particular picture with a lower resolution than the resolution for the normal video stream.
According to another aspect of the invention, a system for providing video data, said system comprises:
a transmitter for transmitting a normal video stream representing video content, wherein the normal video stream is for normal playback, and for transmitting a trick mode stream representing the video content, wherein the trick mode stream is for trick mode play.
Advantageously the trick mode stream comprises fewer pictures than the normal video stream.
Advantageously the trick mode stream has a lower resolution than the normal video stream.
Advantageously the video content comprises a plurality of pictures, and wherein the system further comprises:
an encoder for encoding a particular picture from the plurality of pictures for the normal video stream, encoding the particular picture from the plurality of pictures for the trick mode stream and encoding another picture from the plurality of the pictures for the normal video stream after encoding the particular picture from the plurality of pictures for the normal video stream and the trick mode stream.
Advantageously the video content comprises a plurality of pictures, and wherein the system further comprises:
a first encoder for encoding a particular picture from the plurality of pictures for the normal video stream; and
a second encoder for encoding the particular picture from the plurality of pictures for the trick mode stream.
Advantageously the second encoder encodes the particular picture with lower resolution than the first encoder.
According to another aspect of the invention, a system for processing video data, said system comprises:
storage for receiving a normal video stream; and
a first circuit for generating a trick mode stream from the normal video stream.
Advantageously the storage stores the trick mode stream.
Advantageously the system further comprises:
a second circuit for decrypting the normal video stream, thereby resulting in a first decrypted normal video stream.
Advantageously the system further comprises:
a third circuit for decoding the first decrypted normal video stream, thereby resulting in a first decoded decrypted normal video stream.
Advantageously the first normal video stream is discarded after generating the trick mode stream.
Advantageously the normal video stream is decrypted after receiving a decryption key, thereby resulting in a second decrypted normal video stream.
Advantageously the second decrypted normal video stream is provided for display.
Advantageously the trick mode stream is provided for display after receiving a request for a trick mode function.

These and other advantages and novel features of the present invention, as well as illustrated embodiments thereof will be more fully understood from the following description and drawings.

### BRIEF DESCRIPTION OF SEVERAL VIEWS OF THE DRAWINGS

**FIGURE 1** is a block diagram of video data for facilitating at least one trick mode function in accordance with an embodiment of the present invention;

**FIGURE 2** is a block diagram of an exemplary system for facilitating at least one trick mode function in accordance with an embodiment of the present invention;

**FIGURE 3** is a block diagram of another exemplary system for facilitating at least one trick mode function in accordance with an embodiment of the present invention;

**FIGURE 4A** is a block diagram of an exemplary user terminal in accordance with an embodiment of the present invention;

**FIGURE 4B** is a flow diagram for providing trick mode functionality in accordance with an embodiment of the present invention;

**FIGURE 4C** which describes the encoding and decoding of a normal video stream and trick mode stream during a rewind function;

**FIGURE 5A** is a block diagram of another exemplary user terminal in accordance with an embodiment of the present invention;

**FIGURE 5B** is a flow diagram for generating the trick mode stream in accordance with an embodiment of the present invention;

**FIGURE 6** is a block diagram of an exemplary encoder system in accordance with an embodiment of the present invention; and

**FIGURE 7** is a block diagram of another exemplary encoder system in accordance with an embodiment of the present invention.

### DETAILED DESCRIPTION OF THE INVENTION

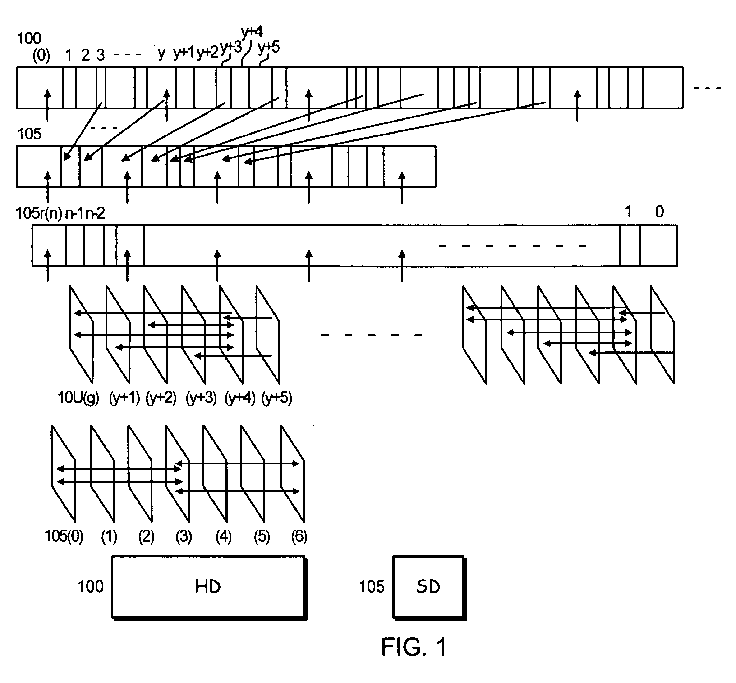

Referring now to **FIGURE 1**, there is illustrated a block diagram of an exemplary normal video stream 100 and an exemplary trick mode stream 105. A trick mode function includes functions, such as, fast forward, rewind, reverse play, and displaying pictures in a different order than the normal playback order.

The normal video stream 100 comprises a series of pictures 100(0)...100(n) that are viewed during normal play back. In certain embodiments of the present invention, the normal video stream 100 can be a compressed representation of video content, in accordance with a video compression standard, such as, but not limited to, Advanced Video Coding (AVC) (also known as MPEG-4 Part 10, and H.264), and SMPTE VC-1.

The trick mode stream 105 comprises a series of pictures 105(0)...105(m) that may be viewed during a trick mode function, such as fast forward or reverse play. Each of the pictures 105(0)...105(m) can correspond to a picture in the normal video stream 100. For example, during the playback of normal video stream 100, where a user requests a trick mode function, pictures 105() from the trick mode stream 105 are displayed. Pictures 105() that are displayed from the trick mode stream 105 correspond to the pictures 100 ( ) of the normal video stream 100 that can be displayed to effectuate the trick mode function.

For example, a 3X forward play (three times normal playback speed) can be effectuated by displaying one picture, e.g., picture 100(y), 100(y+3),... out of three consecutive pictures, e.g., 100(y), 100(y+1), 100(y+2), and 100(y+3), 100(y+4), 100(y+5) (in the presentation order).

However, this may be disadvantageous for several reasons. The pictures forming the normal video stream 100 may have data dependencies to the fullest extent permitted by the compression standard. For example, where the normal video stream 100 is encoded in accordance with AVC, the pictures can have a wide range of dependencies, and pictures can be predicted from bi-directionally predicted pictures. In the illustrated example, where the arrows indicated the data dependencies, picture 100(y), 100(y+1), 100(y+2), and 100(y+4) may have to be decoded to decode picture 100(y+3). This may require decoding the normal video stream 100 at approximately three times the rate that would be required for normal decoding and display. Additionally, because picture 100(y+3) is displayed following picture 100(y), these pictures would be decoded prior to displaying picture 100(y+3).

In the case of reverse play (also referred to as rewind), displaying pictures in order 100(y+5), 100 (y+4), ... 100(y), pictures 100(y)...100(y+4) may have to be decoded to decode 100(y+5), followed by decoding pictures 100(y) ...100(y+3) to decode 100(y+4), pictures 100(y), 100(y+1), 100(y+2) to decode 100(y+3), etc. Picture 100(y) is what is known as a random access point. A random access point is a point at which decoding may begin such that the decoding can result in correctly decoded pictures. For example, it is not necessary to receive and decode pictures transmitted before a random access point in order to decode and display pictures starting at the random access point.

To effectuate a rewind (or reverse play) function that displays all of the pictures in the stream, it is possible that each of the pictures between the random access point and the display picture may need to be decoded, thereby increasing the processing. This can be aggravated where the normal video stream 100 has few random access points (indicated by the vertical arrows). For example, if there is only one random access point every second, there may be as many as sixty pictures between random access points.

Displaying the trick mode stream 105 can facilitate the trick mode function in a variety of ways. For example, the trick mode stream 105 can comprise pictures that correspond to the pictures that are displayed during a certain trick mode function. For example, the trick mode stream 105 when displayed in its native display order, e.g. pictures 105(0)...105(m), displays pictures corresponding to the pictures that can be played from the normal video stream 100 to effectuate a fast-forward function, e.g., 3X fast forward. This can also facilitate fast forward functions at faster speeds. For example, to achieve a faster speed, e.g., 12X fast forward, one out of every four consecutive pictures of the trick mode stream are displayed. During a rewind (or reverse play) function, pictures from the trick mode stream 105 can be displayed that correspond to the rewind order. The trick mode streams may be constructed with relatively few pictures between random access points, thereby facilitating reverse order play.

In certain embodiments of the present invention, there may be a special type of trick mode stream 105 referred to as a rewind trick mode stream 105r. The rewind trick mode stream 105r comprises pictures 105r(0...n) that correspond to pictures of the normal video stream 100 in the reverse order. Thus, in the rewind trick mode stream 105r, the pictures 105r(0...n) correspond to pictures 100(n...0), respectively. Displaying the rewind trick mode stream 105r in its native order represents a 1X rewind (or reverse play) of the normal video stream 100. To achieve faster rewind speeds, such as 3X rewind, a single picture from three consecutive pictures in the reverse trick mode stream 105r can be displayed. Alternatively, the rewind trick mode stream 105r can comprise pictures 105(0...n/3) that correspond to the pictures 105(n, n-3, n-6,...0), respectively.

The rewind trick mode stream 105r can be used together with a forward order trick mode stream 105 to facilitate the rewind and fast forward trick mode functions, respectively. Alternatively, the rewind trick mode stream 105r can be used to facilitate both the fast forward order and the rewind order. The fast forward order is achieved by displaying pictures from the rewind trick mode stream 105r in reverse.

The trick mode streams 105 may have significant data dependency restrictions. For example, more frequent random access points may be placed in the trick mode stream 105. The more frequent random access points facilitate displaying pictures from the trick mode stream 105 in reverse order, such as a rewind operation or a fast forward operation where the rewind trick mode stream 105r is used.

Additionally, in the trick mode stream 105 certain particular pictures, such as bi-directionally predicted pictures, may not be used for predicting other pictures. Pictures that are not used for predicting other pictures will now be referred to as discardable pictures. This is particularly useful when displaying the pictures of the trick mode stream 105 at a faster than native order. When the pictures of the trick mode stream 105 are displayed at a faster than native order, one picture from a number of consecutive pictures is displayed. Accordingly, the one picture of the consecutive pictures that is displayed can be selected to avoid discardable pictures. Accordingly, decoding discardable pictures can be skipped altogether.

In certain embodiments of the present invention, the pictures of the trick mode stream 110 may have the data dependency restrictions of the MPEG-2 standard.

Additionally, the pictures of the trick mode stream 105 can have a lower resolution than the corresponding pictures of the normal video stream 100. For example, in certain embodiments of the present invention, the normal video stream 100 can comprise pictures that are high definition (HD) while the trick mode stream 110 can comprise pictures 105 that are standard definition (SD). The lower resolution pictures may be acceptable for trick mode functions because the lower resolution may be less discernable to the user in contrast to normal playback. The use of lower resolution pictures in the trick mode stream 105 generally results in reduced processing requirements when decoding, compared with decoding of the normal stream 100. Therefore trick mode operations that may require decoding of more than one picture in order to display one picture may have more manageable processing requirements than would be the case with unconstrained normal streams.

The use of lower resolution pictures and fewer pictures for the trick mode stream 105 reduces the size of the trick mode stream 105 as a proportion of the normal video stream 100. Additionally, according to certain embodiments of the present invention, the trick mode stream may include fewer pictures compared to the normal video stream 100. For example, a trick mode stream 105 with 1/3 the pictures in the normal video stream at SD instead of HD, will have on the order of 1/18 the amount of data of the normal video stream.

Both, either, or neither of the normal video stream 100 and the trick mode stream 105 can be encrypted. However, encryption may not be as important where the trick mode stream 105 comprises significantly fewer pictures than the normal video stream 100 or has lower spatial or temporal resolution than the normal video stream 100, because the trick mode stream 110 would have significantly less value to unauthorized users.

In certain embodiments of the present invention, the normal video stream 100 can be transmitted to a user terminal, such as a set top box. The user terminal may then generate the trick mode stream 105. Alternatively, the normal video stream 100 and the trick mode stream 105 can be transmitted together to a user terminal.

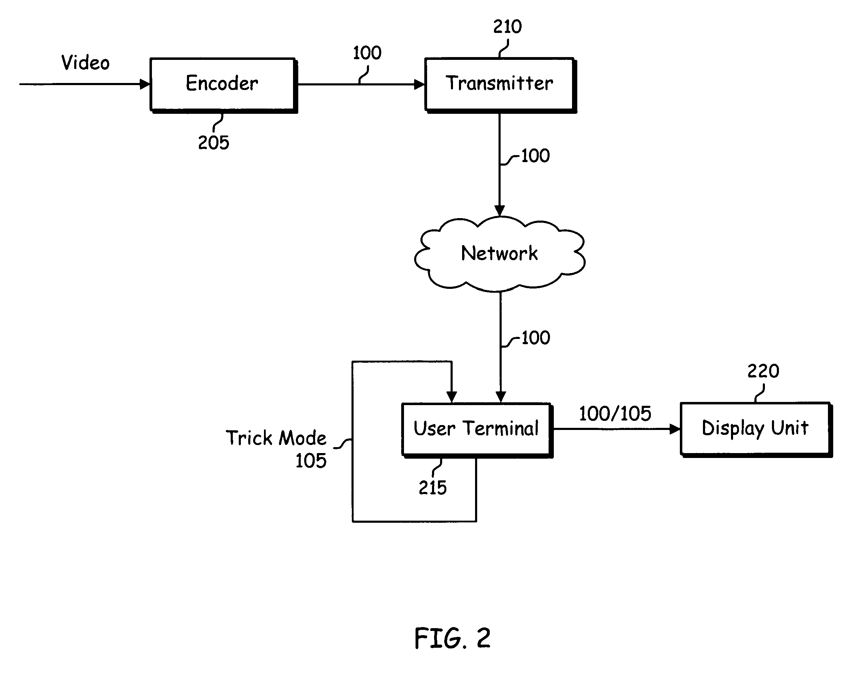

**FIGURE 2** is a block diagram of an exemplary system for facilitating at least one trick mode function in accordance with an embodiment of the present invention. An encoder 205 receives and encodes video, thereby resulting in a normal video stream 100. A transmitter 210 transmits the normal video stream 100 over a network to a user terminal 215.

The network can comprise a variety of communication channels such as, but not limited to, the internet, a cable distribution network, a satellite distribution network, an optical disc, the public switched telephone network, a cellular phone network, or any combination thereof. The user terminal 215 receives normal video stream 100. The user terminal 215 can then generate the trick mode stream 105 from the normal video stream 100.

A user can then view the normal video stream 100 using the trick mode stream 105 for the trick mode functions on a display unit 220. The user terminal 105 can be any of a variety of terminals, such as, but not limited to, a computer system, a cable set top box, a satellite set top box, a DVD player, a cellular phone, or a personal digital assistant. The display unit 220 can also be integrated into the user terminal 105, as in cell phone or personal digital assistant display screens. The user terminal 105 will be later be described in greater detail below.

It is noted that the normal video stream 100 may be encrypted. Encryption may be used in cases, such as pay-per-view, or where a service provider might offer a movie to the user for a fee. The normal video stream 100 may be transmitted to the user terminal 210 prior to the user payment of the fee.

Encryption is used to prevent the user from viewing the video prior to payment of the fee. Upon payment of the fee, the service provider may transmit an decryption key to the user terminal 210. As will be described below, the user terminal 210 uses the decompressed normal video stream 100 to generate the trick mode stream 105. In order to generate the trick mode stream 105, the user terminal 210 decrypts the normal video stream 100.

In one embodiment of the present invention, the user terminal 210 receives the decryption key for the limited purpose of generating the trick mode stream 105. In another embodiment of the present invention, the user terminal 210 generates the trick mode stream 105 after the user pays the fee, and the user terminal 210 receives the decryption key.

Alternatively, the service provider can transmit the normal video stream 100 and the trick mode stream 105 to the user terminal. The foregoing makes the trick mode stream 105 available at the time of the user payment. Additionally, transmission of the decryption key prior to the user payment is avoided. In another embodiment the trick mode stream 105 may not be encrypted while the normal video stream 100 is encrypted. Alternatively, the decryption key for the trick mode stream 105 may be distinct from the decryption key for the normal video stream 100, and the key for the trick mode stream may be managed separately.

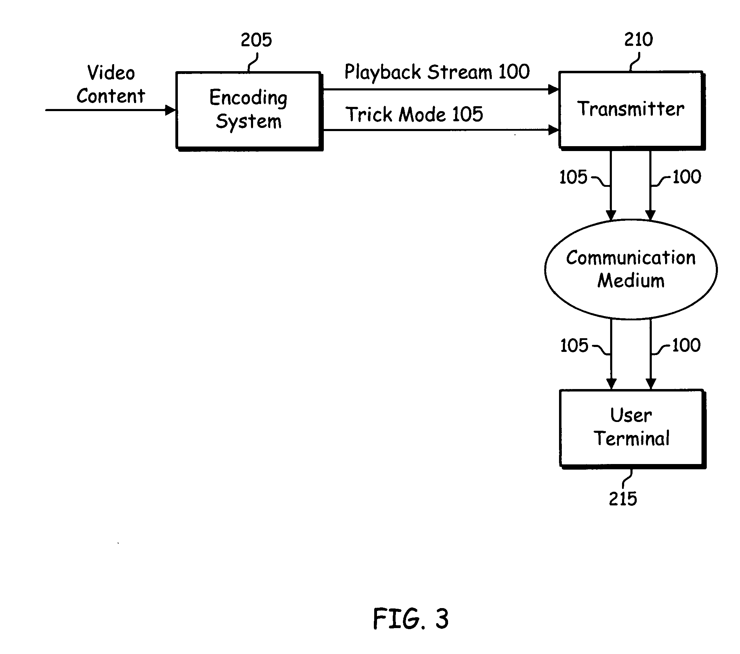

**FIGURE 3** is a block diagram of an exemplary system for facilitating at least one trick mode in accordance with another embodiment of the present invention. An encoding system 305 may receive video content and generate the normal video stream 100 and trick mode stream 105, therefrom. Alternatively, the encoding system 305 may receive the normal video stream 100 and generate the trick mode stream 105. The encoding system 305 will be described in greater detail below.

A transmitter 210 transmits the normal video stream 100 and the trick mode stream 105 over a communications medium to a user terminal 215. The user terminal 215 is equipped to decompress the normal video stream 100 and the trick mode stream 105. However, in cases where the normal video stream 100 and/or the trick mode stream 105 are encrypted, the user terminal 215 can decrypt the normal video stream 100 and/or trick mode stream 105 upon receiving a decryption key.

As noted above, the trick mode stream 105 may comprise significantly fewer bits and consume significantly less bandwidth as compared to the normal video stream 100. Accordingly, the additional bandwidth for transmitting the trick mode stream 105 may be acceptable, given the trick mode capability(s) provided.

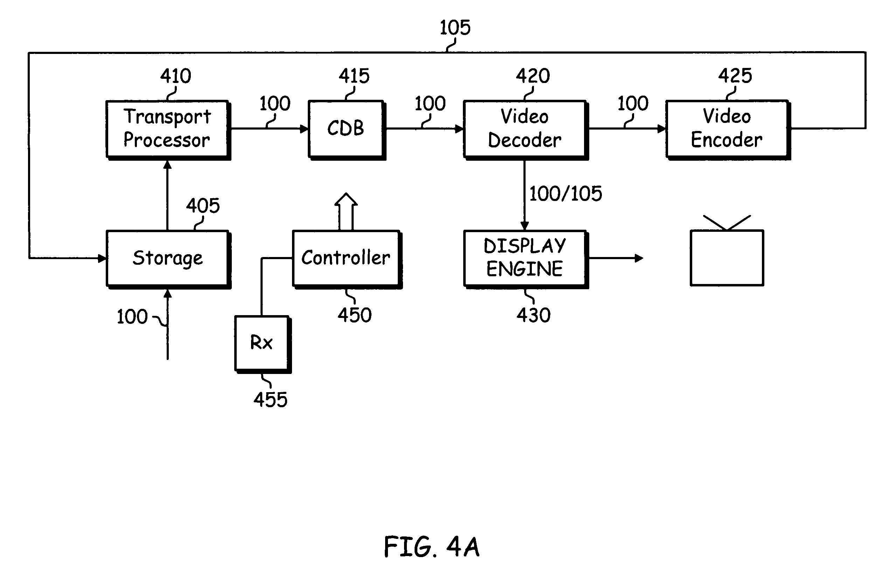

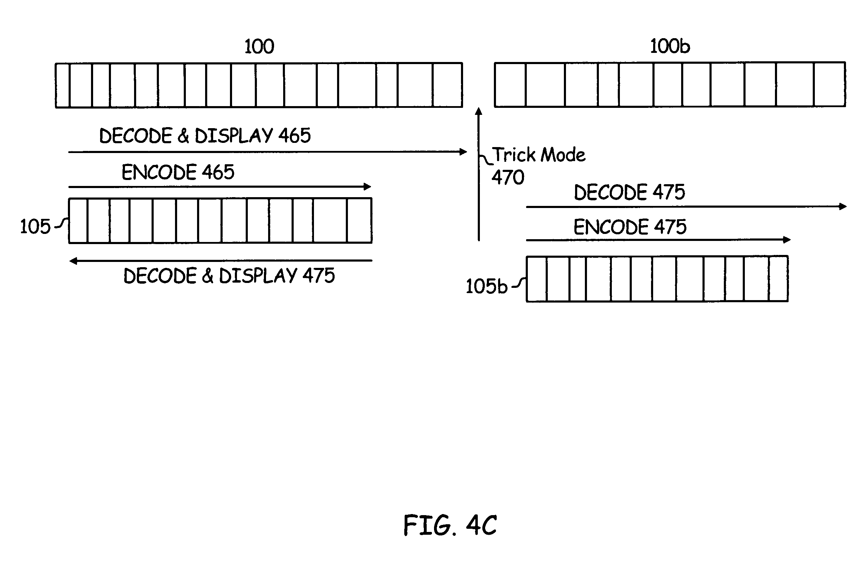

Referring now to **FIGURE 4A**, there is illustrated a block diagram of an exemplary user terminal 210 for generating a trick mode stream 105 in accordance with an embodiment of the present invention. The user terminal 210 comprises storage 405 for storing a received the normal video stream 100. The storage 405 can comprise a variety of memory, such as, but not limited to, hard disk drives, RAM, and optical discs. The normal video stream 100 can be sent from a service provider. The normal video stream 100 can be both compressed and encrypted.

The normal video stream may be received in what are known as transport packets. A transport processor 410 extracts the normal video stream 100 from the transport packets. Where the normal video stream 100 is encrypted, the transport processor 410 decrypts the normal video stream 100. The transport processor 410 writes the normal video stream 100 to a compressed data buffer 415. A video decoder 420 decompresses the normal video stream 100 and provides the decompressed normal video stream to a video encoder 425 via buffer 422. The video encoder 425 generates the trick mode stream 105 by selectively encoding the pictures from the decompressed normal video stream 100. The video encoder may also comprise a scaling function to create lower resolution pictures for encoding in the trick mode stream.

The video encoder 425 can generate a trick mode stream 105 that facilitates or even simulates a trick mode function. For example, the video encoder 425 can selectively encode one picture from every three pictures of the normal video stream 100. Additionally, the video encoder 425 can encode the pictures from the normal video stream in a reverse order. Furthermore, the pictures can be encoded with a lower resolution, more random access points, and with greater data dependency restrictions.

It is noted that because the trick mode stream 105 is generated locally, communication bandwidth considerations may be minimal. Accordingly, the encoding decisions by the encoder 425 can be made with greater emphasis on decoding ease. Additionally, the encoder 425 may use a different encoding scheme from the encoding scheme for the normal video stream 100. In other embodiments, the video encoder 425 can use MPEG-2 for encoding the trick mode stream 105, while the normal video stream 100 may be encoded using AVC. The encoding method utilized by the video encoder 425 can also be proprietary. Additionally, where memory capacity of the storage 405 is not a limiting factor, the video encoder 425 may not use compression, at all. The trick mode stream 105 can be written to the buffer 405 to be available to provide trick mode functions when the normal video stream 100 is played.

In one embodiment of the present invention, the user terminal 210 can generate the trick mode stream 105 while displaying the normal video stream 100. Where the normal video stream 100 is encrypted to prevent unauthorized use prior to the user payment of a fee, the normal video stream 100 is decrypted after payment of the fee.

The video decoder 420 provides the decoded normal video stream 100 to both the video encoder 425 and the display engine 430. The video encoder 425 can create the trick mode stream 105. As a result, the trick mode stream 105 is available up to the viewing point. Thus, the rewind function is available.

However, if the user initiates a trick mode function, the video decoder 420 can provide the decoded trick mode stream 105 to the display engine 430 and continue to decode the normal video stream 100. The video encoder 425 can continue to generate the later pictures of the trick mode stream 105.

As noted above, the trick mode stream 105 can be encoded using a different encoding standard from the normal video stream 100. Therefore, in one embodiment of the present invention, the video decoder 420 can decode a normal video stream 100 encoding in accordance with a first standard, and provide the decoded normal video stream 100 to both the display engine 430 and the video encoder 425. The video encoder 425 can generate the trick mode stream from the normal video stream 100 by encoding using another encoding standard.

In one embodiment, when the user selects a trick mode function, the video decoder 420 decodes both the normal video stream 100 according to the first standard, and the trick mode stream 105 according to the other encoding standard. The video decoder 420 provides the decoded normal video stream 100 to the video encoder 425 and the decoded trick mode stream 105 to the display engine 430.

The foregoing functionalities can be facilitated by means of a controller 450 that commands the transport processor 410, video decoder 420, video encoder 425, and display engine 430. A receiver 455 can receive a signal from a remote control unit, requesting a particular trick mode function. The signal can cause the controller 450 to issue commands that effectuate the requested trick mode function.

In one embodiment of the present invention, the controller 450 can provide commands in the payload of transport packets sent to the transport processor 410.

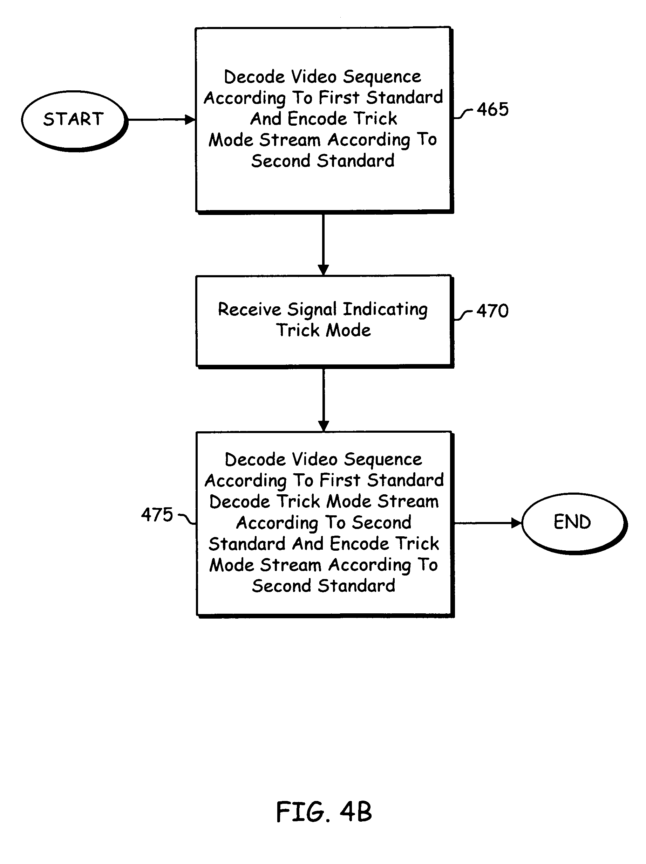

Referring now to **FIGURE 4B,** there is illustrated a flow diagram for providing trick mode functionality in accordance with an embodiment of the present invention. The flow diagram will be described with reference to **FIGURE 4C** which describes the encoding and decoding of the normal video stream 100 and the trick mode stream 105 during a rewind function, in accordance with an embodiment of the present invention.

At 465, the video decoder 420 decodes the normal video stream 100 in accordance with a first standard, and provides the decoded normal video stream to the video encoder 425 and the display engine 430. At 465, the video encoder 425 also encodes the trick mode stream 105 with a second standard. At 470, the video decoder 420 receives a signal from the controller 450 indicating the initiation of a trick mode.

At 475, the video decoder 420 decodes the trick mode stream 105 according to the second standard. To continue generating the later portions of the trick mode stream 105b, the video decoder 420 continues decoding the later pictures 100b from the normal video stream 100. The video encoder 425 continues encoding the later portion of the trick mode stream 105b from the decoded later pictures 100b, in accordance with the second standard.

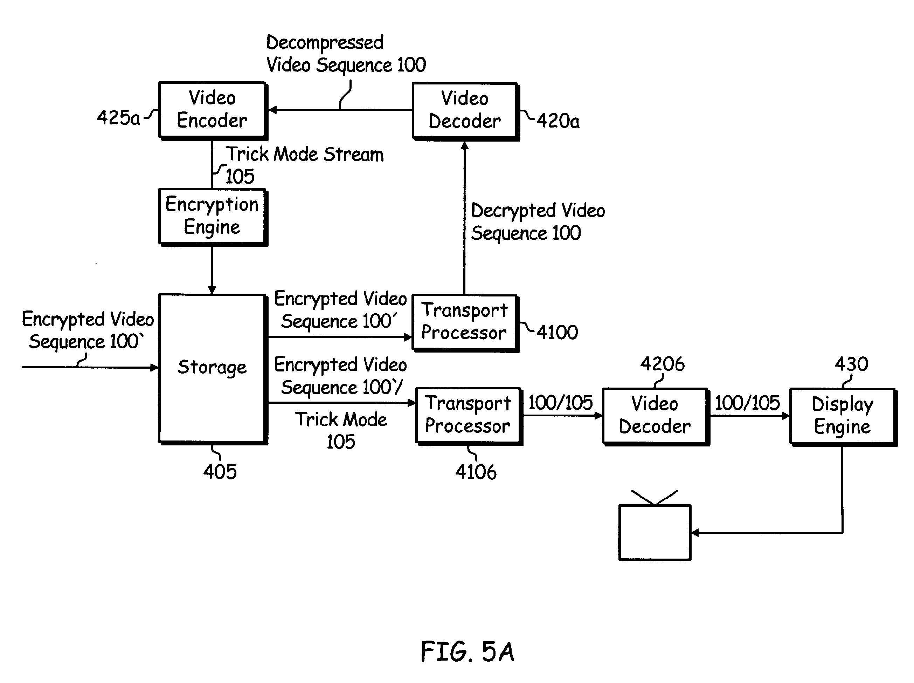

Referring now to **FIGURE 5A**, there is illustrated an exemplary user terminal 210 in accordance with another embodiment of the present invention. The user terminal 210 comprises storage 405 for receiving an encrypted normal video stream 100. A transport processor 410a can be provided with a decryption key and decrypts the normal video stream 100. A video decoder 420a decodes the normal video stream 100 and provides the decoded normal video stream 100 to a video encoder 410a. The video encoder 410a generates the trick mode stream 105. The trick mode stream 105 is optionally encrypted and written to the storage 405.

Upon a user payment, transport processor 410b can receive the decryption key from the service provider. The transport processor 410b decrypts and extracts the normal video stream 100. The transport processor 410b also extracts and if encrypted, decrypts the trick mode stream 105.

The video decoder 420b decodes the normal video stream 100 or, during trick mode functions, the trick mode stream 105 for display by the display engine 430. To prevent unauthorized access to the decrypted normal video stream 100 provided by the transport processor 410a, and the decompressed normal video stream 100 provided by the video decoder 420a, the transport processor 410a and the video decoder 420a, and encryption engine, and any memory buffers therebetween, can be integrated into an integrated circuit in a position that is not accessed by the integrated circuit pins. The decrypted normal video stream 100 from the transport processor 410a and the decompressed normal video stream from video decoder 420a can be discarded, once consumed by the video decoder 420a and video encoder 425a, respectively.

The foregoing functionalities can be facilitated by means of a controller 450 that commands the transport processor 410a, video decoder 420a, video encoder 425a, transport processor 410b, video decoder 420b, and display engine 430. A receiver 455 can receive a signal from a remote control unit, requesting a particular trick mode function. The signal can cause the controller 450 to issue commands that effectuate the requested trick mode function.

In one embodiment of the present invention, the controller 450 can provide commands in the payload of transport packets sent to the transport processor 410.

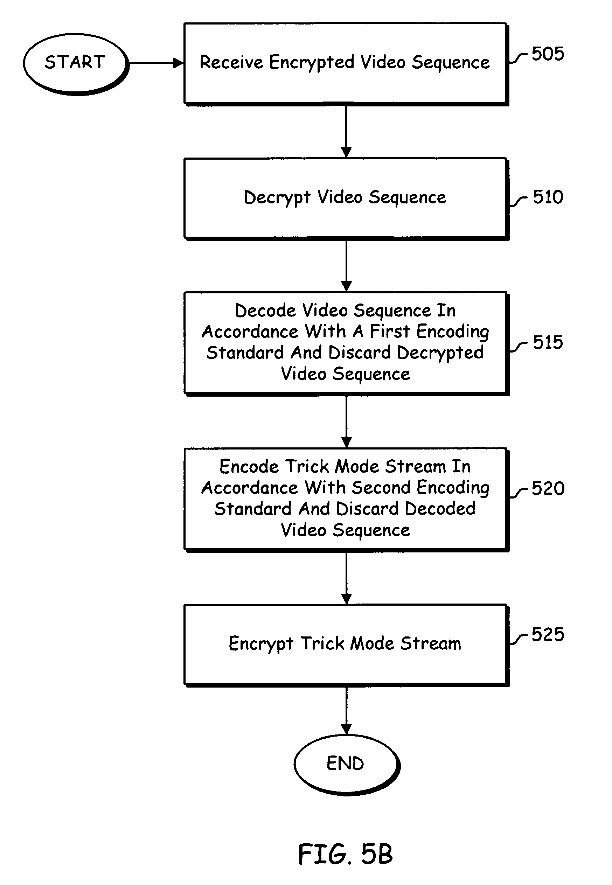

Referring now to **FIGURE 5B,** there is illustrated a flow diagram for generating the trick mode stream in accordance with an embodiment of the present invention. At 505, the buffer 405 receives the encrypted normal video stream 100. At 510, the transport processor 410a decrypts the encrypted normal video stream. At 515, the video decoder 420a decodes the normal video stream 100 in accordance with a first encoding standard and discards the decrypted normal video stream. At 520, the video encoder 425 encodes the trick mode stream 105 in accordance with a second encoding standard, and discards the decoded normal video stream 100. At 525, encryption engine encrypts the trick mode stream and writes the trick mode stream 105 to the buffer 405.

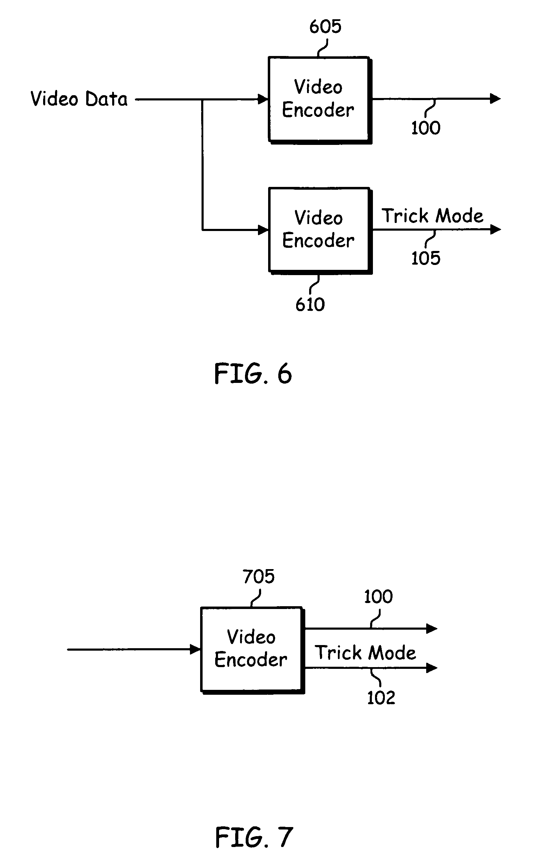

Referring now to **FIGURE 6**, there is illustrated a block diagram of an exemplary encoder system 305 for facilitating at least one trick mode function in accordance with an embodiment of the present invention. The encoder system 305 comprises a first video encoder 605 for encoding the normal video stream 100, and a second video encoder 610 for generating the trick mode stream 105 from the video.

The first video encoder 605 can encode the video data in accordance with a compression standard, such as AVC. The first video encoder 605 may have available any of the encoding features permitted by the compression standard. Additionally, the first video encoder 605 may encode the normal video stream 100 with the highest possible resolution. The second video encoder 610 receives the video data and generates the trick mode stream 105. In certain embodiments, the video data may comprise the decoded and decompressed normal video stream 100.

**FIGURE 7** is a block diagram of another exemplary encoder system for providing at least one trick mode function in accordance with an embodiment of the present invention. The encoder system comprises a video encoder 705. The video encoder 705 receives the video data and generates both the normal video stream 100 and the trick mode stream 105. In certain embodiments of the present invention, the video encoder 705 may generate the pictures for the normal video stream 100 and corresponding pictures for the trick mode stream 105 at substantially the same time.

As the video encoder 705 generates the pictures 100(0...n) for the normal video stream 100, the video encoder 705 can also generate the pictures for the trick mode stream 105(0...m). For the trick mode stream 105, the video encoder 705 can encode certain pictures from the video data at periodic intervals, such as every fourth picture. The pictures of the trick mode stream 105 can also have lower resolution and have data dependency restrictions.

The embodiments described herein may be implemented as a board level product, as a single chip, application specific integrated circuit (ASIC), or with varying levels of the system integrated with other portions of the system as separate components. Alternatively, if the processor is available as an ASIC core or logic block, then the commercially available processor can be implemented as part of an ASIC device wherein certain aspects of the present invention are implemented as firmware.

The degree of integration may primarily be determined by speed and cost considerations. Because of the sophisticated nature of modern processors, it is possible to utilize a commercially available processor, which may be implemented external to an ASIC implementation.

While the present invention has been described with reference to certain embodiments, it will be understood by those skilled in the art that various changes may be made and equivalents may be substituted without departing from the scope of the present invention.

Additionally, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for providing video data, said method comprising:
transmitting a normal video stream representing video content, wherein the normal video stream is for normal playback; and
transmitting a trick mode stream representing the video content, wherein the trick mode stream is for trick mode play.

2. The method of claim 1, wherein the trick mode stream comprises fewer pictures than the normal video stream.

3. The method of claim 1, wherein the trick mode stream comprises pictures with lower resolution than pictures from the normal video stream.

4. The method of claim 1, further comprising:
encrypting the normal video stream.

5. The method of claim 1, wherein the video content comprises a plurality of pictures, and wherein the method further comprises:
encoding a particular picture from the plurality of pictures to form a portion of the normal video stream;
encoding the particular picture from the plurality of pictures to form a portion of the trick mode stream; and
encoding another picture from the plurality of the pictures for the normal video stream after encoding the particular picture from the plurality of pictures to form portions of the normal video stream and the trick mode stream.

6. The method of claim 5, wherein encoding the particular picture from the plurality of pictures to form a portion of the trick mode stream further comprises:
encoding the particular picture with a lower resolution than the resolution for the normal video stream.

7. A system for providing video data, said system comprising:
a transmitter for transmitting a normal video stream representing video content, wherein the normal video stream is for normal playback, and for transmitting a trick mode stream representing the video content, wherein the trick mode stream is for trick mode play.

8. The system of claim 7, wherein the trick mode stream comprises fewer pictures than the normal video stream.

9. The system of claim 7, wherein the trick mode stream has a lower resolution than the normal video stream.

10. system for processing video data, said system comprising:
storage for receiving a normal video stream; and
a first circuit for generating a trick mode stream from the normal video stream.
